# EUROPEAN PATENT SPECIFICATION

(11) **EP 1 487 178 B1**
(45) Date of publication and mention of the grant of the patent: **09.11.2011**
(21) Application number: 03808858.9
(22) Date of filing: 30.07.2003
(51) Int. Cl.: H04L 29/06, H04L 29/08

(54) **COMMUNICATION DEVICE AND COMMUNICATION METHOD**
KOMMUNIKATIONSGERÄT UND KOMMUNIKATIONSVERFAHREN
PROCEDE ET DISPOSITIF DE COMMUNICATION

(30) Priority: 15.10.2002 JP 2002300726
(43) Date of publication of application: 15.12.2004
(73) Proprietor: Panasonic Corporation, Kadoma-shi Osaka 571-8501 (JP)
(72) Inventor: HASHI, Ryutaro, Kanazawa-shi, Ishikawa 921-8163 (JP); SUMASU, Atsushi, Yokosuka-shi, Kanagawa 238-0013 (JP)
(74) Representative: Grünecker, Kinkeldey, Stockmair & Schwanhäusser
(86) International application number: PCT/JP2003/009626
(87) International publication number: WO 2004/036876

(56) References cited:
- EP-A1- 1 079 550
- JP-A- 05 292 150
- JP-A- 06 338 922
- US-A- 4 775 974
- US-A1- 2002 036 996

## Description

### Technical Field

The present invention relates to a communication apparatus and a communication method.

### Background Art

In data communications, in general, communication protocol are defined as rules for the exchange of information between communicating terminals and computers. For example, communication protocol pertaining to the transmission of information in data communication systems include the Basic Mode Data Transmission Control Procedure (hereinafter "basic procedure") and the HDLC (High-level Data Link Control) procedures based on the OSI (Open System Interconnection) protocol.

Some communication protocol require ensuring in advance a physical channel on which information is transmitted and a logical channel (hereinafter referred to as a link) defined by the protocols. Therefore, in order to ensure a link, a communication apparatus may request a receiving side apparatus to establish a link before the transmission of information, and the receiving side apparatus, while establishing a link, sends back to the communication apparatus an acknowledgment reporting the reception of the link establishing request. In the basic procedure, which is an example of such communication protocol that require the establishment of links, information is transmitted through the five phases including the connection of a physical channel, the establishment of a link, the transfer of information, the termination of the link, and the disconnection of the physical channel.

As for the communication protocol like the basic procedures, a technique is known for increasing the amount of information transmitted through the above-mentioned series of phases to enhance the efficiency of the information transmission (for example, refer to Japanese Patent Application Laid-Open No. 10-247942 corresponding to publication No. 2000-078120)

However, pre-communications, typically including the link establishment, are performed not to send actual information but to send other data prior to the transmission of the actual information; therefore, performing a pre-communication prior to each transmission of a certain traffic of information would cause the problem of reduced average transmission rate in applications that require real-time transmission of information, e.g. video phones. "Pre-communications" herein include, as well as that for establishing links, negotiation for specifying destination terminals, communication rates, transmission formats, and so on.

Transmitting a large amount of information after a single pre-communication reduces the ratio of the pre-communication time with respect to the information transmission time, resulting in an enhanced average transmission rate. However, in communications that undergo considerable variations of transmission environments, e.g. in radio communications, enlarging the pre-communication intervals makes it difficult to follow the environmental variations, resulting in deteriorated accuracy of the information communication.

US 2002/0036996 A relates to modifying a bearer channel for changing a 32 kbs channel to a 64 kbs channel in a CDMA system. For high speed data and fax communications, a subscriber unit (SU) may request for the establishment of a second, 64 kbs duplex link between the radio carrier station (RCS) modem and the SU. During the establishment procedure, a remote processing unit and the SU exchange the same data over both the 32 kbs and the 64 kbs link through the RCS.

EP 1 079 550 A1 relates to optical transmission system for simultaneously connecting a plural terminals to a hub. In order to enable simultaneous communication between the terminals and the hub, the terminals are communicating each using different wavelength spectra and the hub is communicating with the terminals separately employing different space cells. All communication between terminals is performed via the hub.

US 4,775,974 A relates to the multiplexing of virtual connections between a source terminal 90 and plural destination terminals 91, 92 and 93. In this context, each virtual connection is defined as a logic link which is first established between two terminals. Upon link establishment, the logic link is used for transmitting consecutive messages between the two terminals.

### Disclosure of Invention

An object of the present invention is to enhance the average transmission rate while preventing deterioration of the accuracy of information communication.

The main subject of the invention is, in communication in which a link is established each time a certain amount of information is transmitted, to start a link establishing operation for the next information before a receiving response about the preceding transmission of a certain amount of information is sent back.

This is achieved by the subject matter of the independent claims. Advantageous embodiments are subject to the dependent claims.

### Brief Description of Drawings

FIG. 1 is a block diagram showing main components of the communication apparatus according to a first embodiment of the invention;
FIG. 2 is a sequence chart illustrating the operation of the communication apparatus of the first embodiment;
FIG. 3 is a block diagram showing main components of the communication apparatus according to a second embodiment of the invention; and
FIG. 4 is a sequence chart illustrating the operation of the communication apparatus of the second embodiment.

### Best Mode for Carrying Out the Invention

The embodiments of the present invention are now described in detail referring to the drawings.

### (First Embodiment)

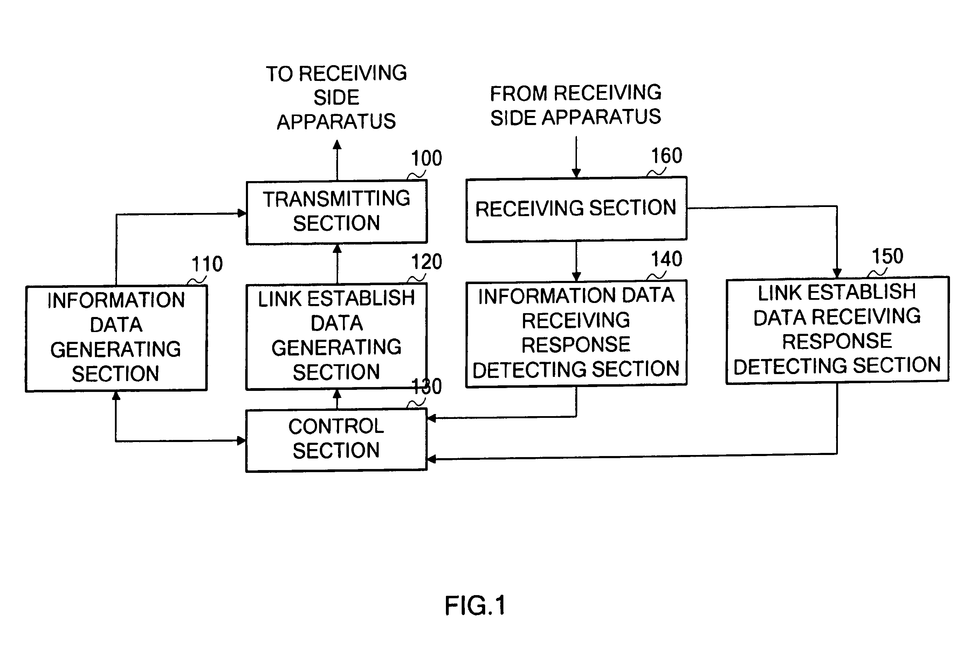

FIG. 1 is a block diagram showing main components of the communication apparatus of a first embodiment of the invention. The communication apparatus shown in FIG. 1 has a transmitting section 100, an information data generating section 110, a link establish data generating section 120, a control section 130, an information data receiving response detecting section 140, a link establish data receiving response detecting section 150, and a receiving section 160.

The transmitting section 100 transmits to a receiving side apparatus (not shown) information data generated by the information data generating section 110 and link establish data generated by the link establish data generating section 120.

The information data generating section 110 generates information data, such as speech data and image data.

The link establish data generating section 120 generates link establish data for requesting establishment of a link with the receiving side apparatus (not shown) prior to the transmission of information data.

The control section 130 controls the information data generating section 110 and the link establish data generating section 120 on the basis of the timing of transmission of information data, the timing of reception of information data receiving response, and the timing of reception of link establish data receiving response, whereby the information data and link establish data are generated and the timing of data transmission is controlled. More specifically, upon reception of a receiving response reporting the reception of link establish data, the control section 130 controls the information data generating section 110 to generate information data to be transmitted over the established link and causes the transmitting section 100 to transmit the information data. Then, after the transmission of the information data, and before the reception of a receiving response about that piece of information data, the control section 130 controls the link establish data generating section 120 to generate link establish data for the transmission of the next piece of information data, which is transmitted through the transmitting section 100. The timing of the data transmission and reception will be fully described later.

The information data receiving response detecting section 140 detects, from data received at the receiving section 160, a receiving response reporting the reception of information data.

The link establish data receiving response detecting section 150 detects, from data received at the receiving section 160, a receiving response about link establish data.

The receiving section 160 receives data transmitted from the receiving side apparatus (not shown), including receiving responses to information data and link establish data.

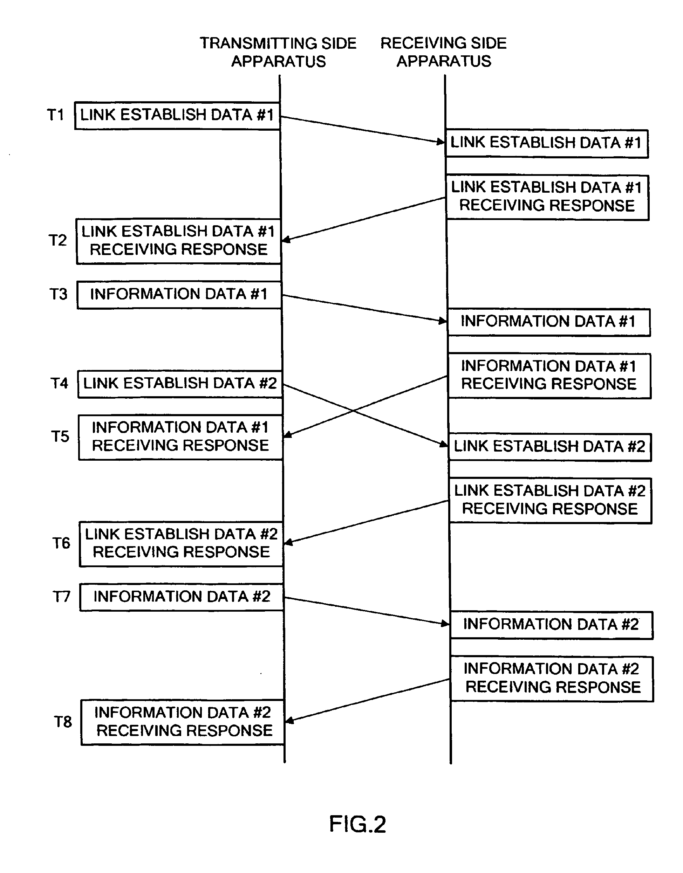

Next, the operation of the communication apparatus thus configured is specifically described referring to the sequence chart of FIG. 2.

First, when sending a certain amount of information data #1, the control section 130 controls the link establish data generating section 120 to generate link establish data #1 for requesting the establishment of a link for sending the information data #1, which is sent at time T1 by the transmitting section 100. When the receiving side apparatus receives the link establish data #1, a link for the transmission of the information data #1 with the communication apparatus of the embodiment is established and the receiving side apparatus sends a receiving response about the link establish data #1 to notify the communication apparatus of the reception of the link establish data #1.

Then, at time T2, the receiving section 160 receives the link establish data #1 receiving response and the link establish data receiving response detecting section 150 detects the reception of the link establish data #1 receiving response. When the link establish data receiving response detecting section 150 detects the reception of the link establish data #1 receiving response, the control section 130 is notified of it. Then the control section 130 detects that a link for sending the information data #1 has been established and controls the information data generating section 110 to generate the information data #1, which is sent at time T3 by the transmitting section 100.

When the information data #1 is sent by the transmitting section 100, the control section 130 is notified of it. The control section 130 then controls the link establish data generating section 120 to generate link establish data #2 for requesting the establishment of a link for sending the next information data #2, which is sent at time T4 by the transmitting section 100.

When the receiving side apparatus receives the information data #1 sent from the transmitting section 100, the receiving side apparatus sends a receiving response about the information data #1 to notify the communication apparatus of the reception of the information data #1. The receiving section 160 receives the information data #1 receiving response at time T5 and the information data receiving response detecting section 140 detects the reception of the information data #1 receiving response.

Now, it should be noted that the time T4 at which the link establish data #2 is sent is earlier than the time T5 at which the information data #1 receiving response is received, meaning that the communication apparatus begins the link establish operation for the next information data #2 before confirming that the information data #1 has been normally received at the receiving side apparatus. This is because establishing a link for sending the next information data #2 does not always require that the preceding information data #1 has been normally received at the receiving side apparatus.

This reduces the ratio of the time required only for the link establishment with respect to the total transmission time, without reducing the number of times that a link establish request is generated, thus making it possible to save transmission time resources.

Thus, in communications that suffer large propagation delay, where data transmission from a communication apparatus to a receiving side apparatus takes a long time, e.g. in satellite radio communications, data having a time length not more than the propagation delay, like that shown in FIG. 2, canbe transferred by half duplex communication just by switching transmission and reception with proper timing.

Referring to FIG. 2 again, when the link establish data #2 sent at time T4 is received at the receiving side apparatus, a link for the transmission of the information data #2 is established with the communication apparatus of the embodiment, and the receiving side apparatus sends a link establish data #2 receiving response to notify the communication apparatus of the reception of the link establish data #2.

Then, at time T6, the receiving section 160 receives the link establish data #2 receiving response and the link establish data receiving response detecting section 150 detects the reception of the link establish data #2 receiving response. When the link establish data receiving response detecting section 150 detects the reception of the link establish data #2 receiving response, the control section 130 is notified of it. Then the control section 130 detects that a link for sending the information data #2 has been established, and it sends the information data #2 at time T7 and receives an information data #2 receiving response at time T8, as in the transmission of the information data #1. When next information data #3 (not shown) is to be sent, link establish data #3 (not shown) is sent between time T7 and time T8.

Thus, according to this embodiment, after a transmission of information data, the operation of establishing a link for the next information data is started without waiting for the reception of a receiving response about the preceding information data, which enhances the average transmission rate without reducing the number of times that a link is established and hence without deteriorating the accuracy of the information communication.

While this embodiment has shown a configuration in which the receiving side apparatus sends a receiving response to information data, no problem arises when it sends no receiving response to information data, as long as it sends a receiving response to link establish data.

### (Second Embodiment)

The feature of a second embodiment of the invention is that the current information data and the link establish data for requesting the establishment of a link for the next information data are multiplexed before being transmitted.

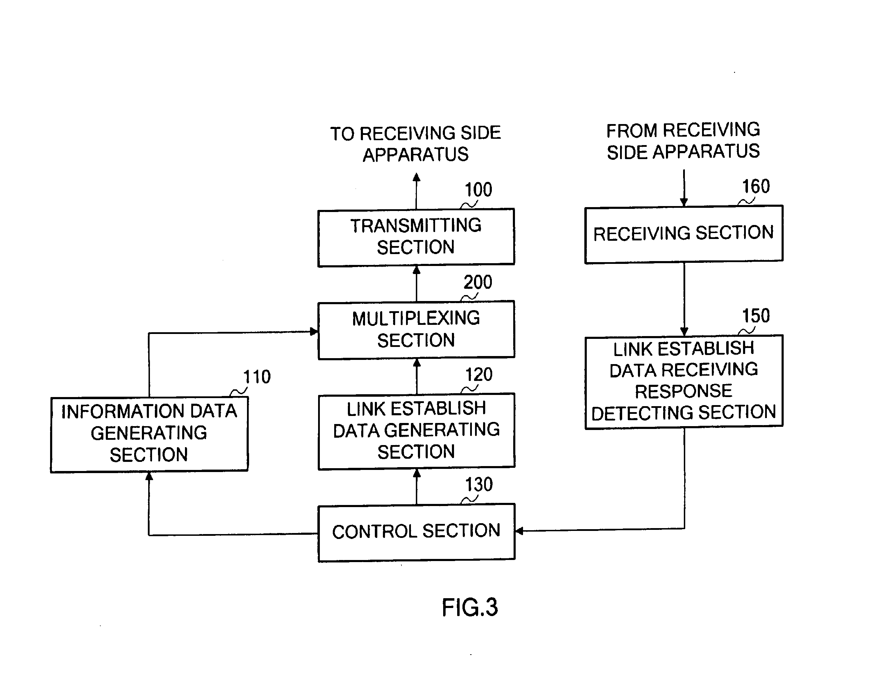

FIG. 3 is a block diagram showing the main components of the communication apparatus of this embodiment. In the communication apparatus of FIG. 3, the same components as those of the communication apparatus of FIG. 1 are shown at the same reference numerals and not described again here. The communication apparatus shown in FIG. 3 has a transmitting section 100, an information data generating section 110, a link establish data generating section 120, a control section 130, a link establish data receiving response detecting section 150, a receiving section 160, and a multiplexing section 200.

The multiplexing section 200 multiplexes information data generated by the information data generating section 110 and link establish data generated by the link establish data generating section 120. More specifically, the multiplexing section 200 multiplexes data by using, e.g. frequency division multiplexing where information data and link establish data are sent at different frequencies, code division multiplexing where link establish data is multiplied by a given spread code, or time division multiplexing where a given bit string is used as the link establish data, so that the receiving side apparatus can separate the link establish data from the information data. Note that the multiplexing section 200 multiplexes the current information data and the link establish data for the next information data.

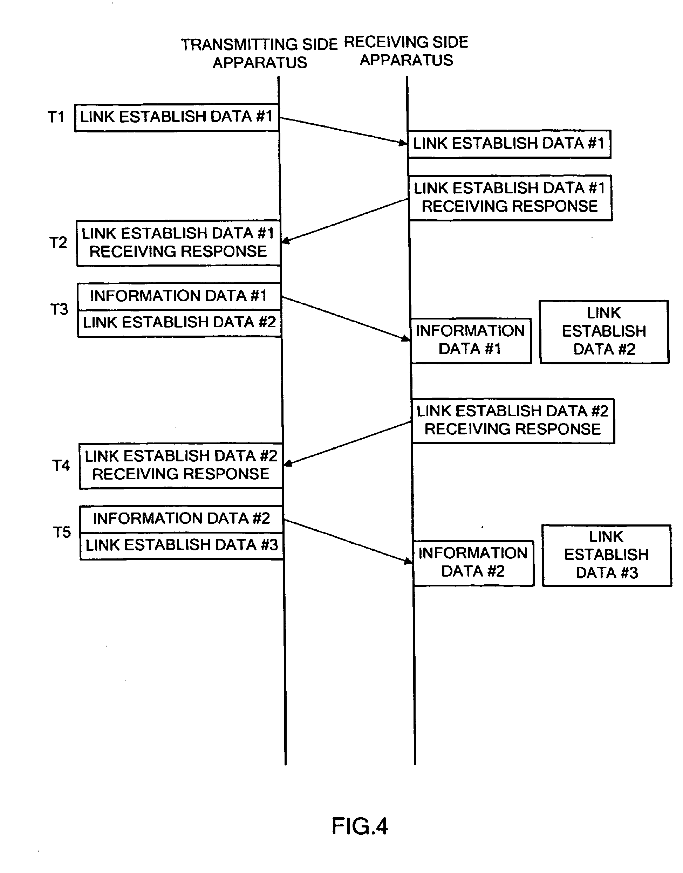

Next, the operation of the communication apparatus thus constructed is specifically described referring to the sequence chart of FIG. 4.

First, when transmitting a given amount of information data #1, the control section 130 controls the link establish data generating section 120 to generate link establish data #1 that requests the establishment of a link for the transmission of information data #1 and the transmitting section 100 sends the link establish data #1 at time T1. When the link establish data #1 is received at the receiving side apparatus, a link for the transmission of the information data #1 with the communication apparatus of this embodiment is established and the receiving side apparatus sends a link establish data #1 receiving response to notify the communication apparatus of the reception of the link establish data #1.

Then, at time T2, the receiving section 160 receives the link establish data #1 receiving response and the link establish data receiving response detecting section 150 detects the reception of the link establish data #1 receiving response. When the link establish data receiving response detecting section 150 detects the reception of the link establish data #1 receiving response, the control section 130 is notified of it. Then the control section 130 detects that a link for sending the information data #1 has been established and controls the information data generating section 110 to generate the information data #1. At the same time, the control section 130 controls the link establish data generating section 120 to generate link establish data #2 for requesting the establishment of a link for sending the next information data #2. Then the multiplexing section 200 multiplexes the information data #1 and the link establish data #2 and the transmitting section 100 sends the multiplexed data at time T3.

When the receiving side apparatus receives the information data #1 and link establish data #2 sent from the transmitting section 100, the receiving side apparatus separates the information data #1 and the link establish data #2, establishes a link for the information data #2, and sends a link establish data #2 receiving response to notify the communication apparatus of the reception of the link establish data #2. The receiving section 160 receives the link establish data #2 receiving response at time T4 and the link establish data receiving response detecting section 150 detects the reception of the link establish data #2 receiving response.

Now, since the link establish data #2 is sent being multiplexed with the preceding information data #1, no time is wastedbefore the reception of the link establish data #2 receiving response.

This reduces the ratio of the time required only for the link establishment with respect to the total transmission time, without reducing the number of times that a link establish request is generated, thus making it possible to save transmission time resources.

Referring to FIG. 4 again, when the link establish data #2 receiving response is received at time T4, the link establish data receiving response detecting section 150 detects the reception of the link establish data #2 receiving response. When the link establish data receiving response detecting section 150 detects the reception of the link establish data #2 receiving response, the control section 130 is notified of it. Then the control section 130 detects that a link for the information data #2 has been established and the multiplexing section 200 multiplexes the information data #2 and the link establish data #3, which is sent at time T5, as in the transmission of the information data #1.

Thus, according to this embodiment, the current information data and the link establish data for the next information data are sent together in multiplexed form, which further enhances the average transmission rate without reducing the number of link establish operations and hence without deteriorating the accuracy of information communication.

In the embodiments above, the send/receive of link establish data and the send/receive of information data, information data receiving response, and link establish data receiving response may be performed by full duplex communication. Then, even when the send/receive of link establishment overlaps in time with the send/receive of other signals, they can be sent/received using separate transmission paths, which further speeds up the link establishment requesting.

Also, in the embodiments above, the send/receive of link establish data and the send/receive of information data, information data receiving response, and link establish data receiving response may be performed by bi-directional simultaneous transmission using divisional multiple access such as the CDM (Code Division Multiple) system. In this case, too, even when link establish send/receive overlaps in time with that of other signals, they can be sent/received separately, so as to further speed up the link establishment requesting.

As described above, the present invention enhances the average transmission rate while preventing deterioration of the accuracy of information communication.

### Industrial Applicability

The present invention is applicable to a communication apparatus and communication method.

## Claims

1. A communication apparatus adapted to transmit a plurality of items of information data each containing a predetermined amount of information, to one receiving side communication apparatus, the communication apparatus comprising:
a transmitting section (100) that, after having received a response to a link establishment request from the one receiving side communication apparatus, is adapted to transmit information data matching the link establishment request using a link established by the link establishment request; and
a requesting section (120) that is adapted to establish a link to the one receiving side communication apparatus;
**characterized in that**
the requesting section is adapted to establish a shew link each time new information data is transmitted by transmitting a new link establishment request to the one receiving side communication apparatus, and, to transmit the new link establishment request for transmission of the new information data, before termination of the link established for transmitting current information data.

2. The communication apparatus according to claim 1, wherein the requesting section (120) adapted to transmit the new link establishment request for the transmission of the new information data immediately after the current information data has been transmitted.

3. The communication apparatus according to claim 1, wherein the transmitting section multiplexes and transmits the current information data and the link establishment request for the transmission of the new information data.

4. The communication apparatus according to claim 3, wherein the transmitting section (100) adapted to multiplex the new link establishment request-data and the information data by using at least one of frequency division multiplexing, time division multiplexing, and code division multiplexing.

5. The communication apparatus according to claim 1, wherein the requesting section (120) transmits the new link establishment request by full duplex communication which simultaneously performs transmission and reception.

6. The communication apparatus according to claim 1, wherein the requesting section (120) adapted to transmit the new link establishment request by bi-directional simultaneous transmission using divisional multiple access.

7. A communication method for transmitting a plurality of items of information data each containing a predetermined amount of information, from a transmitting side communication apparatus to one receiving side communication apparatus, the communication method comprising the steps of:
in the transmitting side communication apparatus, transmitting a first link establishment request for transmission of current information data, to the one receiving side communication apparatus; and
in the transmitting side communication apparatus, after having received a response to the first link establishment request from the one receiving side communication apparatus, transmitting the current information data to the one receiving side communication apparatus using a link established by the first link establishment request;
**characterized by**
in the transmitting side communication apparatus establishing a new link each time new information data is transmitted, by transmitting a new link establishment request for transmission of the new information data, before termination of the link established for transmitting the current information data.

## Patentansprüche

1. Kommunikationsvorrichtung, die so eingerichtet ist, dass sie eine Vielzahl von Informations-Datenelementen, die jeweils eine vorgegebene Menge an Informationen enthalten, zu einer einzelnen Empfangsseiten-Kommunikationsvorrichtung sendet, wobei die Kommunikationsvorrichtung umfasst:
einen Sendeabschnitt (100), der so eingerichtet ist, dass er, nachdem er eine Antwort auf eine Aufforderung zum Einrichten einer Verbindung von der einzelnen Empfangsseiten-Kommunikationsvorrichtung empfangen hat, Informations-Daten, die der Aufforderung zum Einrichten einer Verbindung entsprechen, unter Verwendung einer durch die Aufforderung zum Einrichten einer Verbindung eingerichteten Verbindung sendet; und
einen Aufforderungsabschnitt (120), der so eingerichtet ist, dass er eine Verbindung zu der einzelnen Empfangsseiten-Kommunikationsvorrichtung einrichtet;
**dadurch gekennzeichnet, dass**
der Aufforderungsabschnitt so eingerichtet ist, dass er immer dann eine neue Verbindung einrichtet, wenn neue Informations-Daten gesendet werden, indem er eine Aufforderung zum Einrichten einer neuen Verbindung zu der einzelnen Empfangsseiten-Kommunikationsvorrichtung sendet, und die Aufforderung zum Einrichten einer neuen Verbindung zum Senden der neuen Informationsdaten vor Beendigung der zum Senden aktueller Informations-Daten eingerichteten Verbindung sendet.

2. Kommunikationsvorrichtung nach Anspruch 1, wobei der Aufforderungsabschnitt (120) so eingerichtet ist, dass er die Aufforderung zum Einrichten einer neuen Verbindung zum Senden der neuen Informations-Daten sendet, unmittelbar nachdem die aktuellen Informations-Daten gesendet worden sind.

3. Kommunikationsvorrichtung nach Anspruch 1, wobei der Sendeabschnitt die aktuellen Informations-Daten und die Aufforderung zum Einrichten einer Verbindung zum Senden der neuen Informations-Daten multiplext und sendet.

4. Kommunikationsvorrichtung nach Anspruch 3, wobei der Sendeabschnitt (100) so eingerichtet ist, dass er die Aufforderungs-Daten zum Einrichten einer neuen Verbindung und die Informations-Daten unter Verwendung des Frequenzmultiplex-Verfahrens, des Zeitmultiplex-Verfahrens oder/und des Codemultiplex-Verfahrens multiplext.

5. Kommunikationsvorrichtung nach Anspruch 1, wobei der Aufforderungsabschnitt (120) die Aufforderung zum Einrichten einer neuen Verbindung mittels Vollduplex-Kommunikation sendet, bei der Senden und Empfangen gleichzeitig durchgeführt werden.

6. Kommunikationsvorrichtung nach Anspruch 1, wobei der Aufforderungsabschnitt (120) so eingerichtet ist, dass er die Aufforderung zum Einrichten einer neuen Verbindung mittels bi-direktionalem simultanem Senden unter Verwendung von Teilungs-Mehrfachnutzung (divisional multiple access) sendet.

7. Kommunikationsverfahren zum Senden einer Vielzahl von Informations-Datenelementen, die jeweils eine vorgegebene Menge an Informationen enthalten, von einer Sendeseite-Kommunikationsvorrichtung zu einer einzelnen Empfangsseiten-Kommunikationsvorrichtung, wobei das Kommunikationsverfahren die folgenden Schritte umfasst:
Senden einer ersten Aufforderung zum Einrichten einer Verbindung zum Senden aktueller Informations-Daten in der Sendeseiten-Kommunikationsvorrichtung an die einzelne Empfangsseiten-Kommunikationsvorrichtung; und
nach Empfang einer Antwort auf die erste Aufforderung zum Einrichten einer Verbindung in der einzelnen Empfangsseiten-Kommunikationsvorrichtung, Senden der aktuellen Informations-Daten zu der einzelnen Empfangsseiten-Kommunikationsvorrichtung in der Sendeseiten-Kommunikationsvorrichtung unter Verwendung einer durch die erste Aufforderung zum Einrichten einer Verbindung eingerichteten Verbindung;
**dadurch gekennzeichnet, dass**
in der Sendeseiten-Kommunikationsvorrichtung immer dann, wenn neue Informations-Daten gesendet werden, eine neue Verbindung eingerichtet wird, indem eine Aufforderung zum Einrichten einer neuen Verbindung zum Senden der neuen Informations-Daten vor Beendigung der zum Senden der aktuellen Informations-Daten eingerichteten Verbindung gesendet wird.

## Revendications

1. Dispositif de communication adapté à transmettre vers un dispositif de communication côté réception une pluralité d'éléments de données d'informations contenant chacun une quantité d'informations prédéterminée, le dispositif de communication comprenant :
une section de transmission (100) qui, après avoir reçu une réponse à une demande d'établissement de liaison du dispositif de communication côté réception, est adaptée à transmettre des données d'informations correspondant à la demande d'établissement de liaison en utilisant une liaison établie par la demande d'établissement de liaison ; et
une section de demande (120) adaptée à établir une liaison avec le dispositif de communication côté réception ;
**caractérisé en ce que**
la section de demande est adaptée à établir une nouvelle liaison à chaque fois que de nouvelles données d'informations sont transmises en transmettant une nouvelle demande d'établissement de liaison au dispositif de communication côté réception et à transmettre la nouvelle demande d'établissement de liaison pour la transmission des nouvelles données d'informations avant la fin de la liaison établie pour transmettre les données d'informations en cours.

2. Dispositif de communication selon la revendication 1, dans lequel la section de demande (120) est adaptée à transmettre la nouvelle demande d'établissement de liaison pour la transmission des nouvelles données d'informations juste après que les données d'informations en cours ont été transmises.

3. Dispositif de communication selon la revendication 1, dans lequel la section de transmission multiplexe et transmet les données d'informations en cours et la demande d'établissement de liaison pour la transmission des nouvelles données d'informations.

4. Dispositif de communication selon la revendication 3, dans lequel la section de transmission (100) est adaptée à multiplexer les nouvelles données de demande d'établissement de liaison et les données d'informations en utilisant au moins un multiplexage parmi un multiplexage par répartition en fréquence, un multiplexage par répartition dans le temps est un multiplexage par répartition en code.

5. Dispositif de communication selon la revendication 1, dans lequel la section de demande (120) transmet la nouvelle demande d'établissement de liaison par communication en duplex intégral en effectuant simultanément la transmission et la réception.

6. Dispositif de communication selon la revendication 1, dans lequel la section de demande (120) est adaptée à transmettre la nouvelle demande d'établissement de liaison par transmission simultanée bidirectionnelle en utilisant un accès multiple par répartition.

7. Procédé de communication pour transmettre une pluralité d'éléments de données d'informations contenant chacun une quantité d'informations prédéterminée, d'un dispositif de communication côté transmission vers un dispositif de communication côté réception, le procédé de communication comprenant les étapes consistant à :
dans le dispositif de communication côté transmission, transmettre au dispositif de communication côté réception une première demande d'établissement de liaison pour la transmission des données d'informations en cours ; et
dans le dispositif de communication côté transmission, après avoir reçu une réponse à la première demande d'établissement de liaison du dispositif de communication côté réception, transmettre les données d'informations en cours au dispositif de communication côté réception en utilisant une liaison établie par la première demande d'établissement de liaison ;
**caractérisé par**
dans le dispositif de communication côté transmission, l'établissement d'une nouvelle liaison à chaque fois que de nouvelles données d'informations sont transmises en transmettant une nouvelle demande d'établissement de liaison pour la transmission de nouvelles données d'informations avant la fin de la liaison établie pour transmettre les données d'informations en cours.
